# DEMANDE DE BREVET EUROPEEN

(11) **EP 0 811 568 A1**
(43) Date de publication de la demande: **10.12.1997**
(21) Numéro de dépôt: 97401245.2
(22) Date de dépôt: 04.06.1997
(51) Int. Cl.: B65G 45/02

(54) **Dispositif et procédé de lubrification pour convoyeurs**

(30) Priorité: 05.06.1996 FR 9606937
(71) Demandeur: CONSORTIUM DE RECHERCHES POUR L'APPLICATION DES FLUIDES, CRAF, F-49650 Brain sur Allonnes (FR)
(72) Inventeur: Javelly, Christian, 49650 Allonnes (FR); Malbrunot, Guy, 49700 Les Ulmes (FR)
(74) Mandataire: Casalonga, Axel

(57) **Abrégé**

Dispositif de lubrification 1 automatique, destiné à approvisionner en lubrifiant des organes mobiles 2 suivant une première trajectoire déterminée, disposés à intervalles constants et pourvus de plusieurs graisseurs 3 espacés les uns des autres, comprenant une pluralité de pompes 7 entraînées suivant une deuxième trajectoire, pourvues d'un bâti 8 supportant une partie mobile en translation par rapport au bâti 8, la partie mobile étant capable de venir en contact avec un graisseur 3 pour y injecter du lubrifiant pendant une phase de graissage. Les pompes 7 sont reliées par un moyen de liaison sans fin 6, et le dispositif de lubrification 1 est entraîné par l'action des graisseurs 3 sur les parties mobiles des pompes 7. Pendant la phase de graissage, la partie mobile d'une pompe 7 est coaxiale au graisseur 3 correspondant dès le contact entre ladite partie mobile et ledit graisseur 3. Le dispositif de lubrification 1 comprend un moyen pour maintenir le bâti 8 d'une pompe 7 immobile relativement au graisseur 3 correspondant et la partie mobile se déplace perpendiculairement à la trajectoire du graisseur 3.

## Description

La présente invention concerne le domaine des dispositifs de lubrification d'organes en mouvement dans l'espace, en particulier les convoyeurs, par exemple les escaliers mécaniques. Ces dispositifs de lubrification comportent une partie distributrice de lubrifiant qui entre en contact avec l'organe à lubrifier au cours du mouvement dudit organe, le synchronisme étant assuré du fait de l'entraînement du dispositif par l'organe à lubrifier.

On connaît la demande de brevet français n° 2 528 945 qui concerne un dispositif de graissage équipé de pompes reliées entre elles par une liaison qui forme une boucle sans fin tendue entre deux organes de renvoi portés par un châssis. Chaque pompe comprend un corps et un piston. La trajectoire des pompes entre les deux organes de renvoi est déterminée par un guide, solidaire du châssis, dont le profil est tel qu'une pompe se rapproche progressivement des organes à graisser puis s'en éloigne. Le dispositif est positionné, au montage, de façon qu'un graisseur de l'organe à graisser se trouve engagé dans l'extrémité du piston de chacune des pompes engagées sur le guide. Le déplacement des organes mobiles provoque le déplacement synchrone du dispositif de lubrification. L'extrémité du piston d'une pompe comporte une cavité dans laquelle est logée une plaquette qui dispose d'une certaine liberté de déplacement dans un plan orthogonal à l'axe longitudinal du piston. Cette plaquette est maintenue par des lames de ressort pour être capable de transmettre le mouvement du graisseur à la pompe. Les lames de ressort peuvent s'infléchir plus ou moins pour compenser les variations d'écartement entre les graisseurs.

Toutefois, on a constaté sur de tels dispositifs des problèmes d'accrochage entre une pompe et un graisseur. En effet, lorsqu'une pompe entre en contact avec un graisseur, elle présente un angle non négligeable par rapport à l'axe dudit graisseur. La plaquette montée sur ressort ne permet pas de compenser ce désalignement. Un tel désalignement peut aussi favoriser des fuites de lubrifiant lors du contact de la plaquette et du graisseur.

La présente invention a pour objet de remédier aux inconvénients du dispositif décrit ci-dessus et de proposer un dispositif et un procédé de lubrification automatique dans lequel l'accrochage des pompes avec les organes à lubrifier soit satisfaisant tout en diminuant les fuites de lubrifiant.

Le dispositif de lubrification automatique, selon l'invention, est destiné à approvisionner en lubrifiant des organes mobiles suivant une première trajectoire déterminée, disposés à intervalles constants et pourvus de plusieurs têtes de lubrification espacées les unes des autres. Le dispositif de lubrification comprend une pluralité de pompes entraînées suivant une deuxième trajectoire, pourvues d'un bâti supportant une partie mobile en translation par rapport audit bâti, la partie mobile étant capable de venir en contact avec une tête de lubrification pour y injecter du lubrifiant pendant une phase de graissage, lesdites pompes étant reliées par un moyen de liaison sans fin, et ledit dispositif étant entraîné par l'action des têtes de lubrification sur les parties mobiles des pompes. Pendant la phase de graissage, la partie mobile d'une pompe est coaxiale à la tête de lubrification correspondante dès le contact entre ladite partie mobile et ladite tête de lubrification, le dispositif comprenant un moyen pour maintenir le bâti d'une pompe immobile relativement à la tête de lubrification correspondante et la partie mobile se déplaçant perpendiculairement à la trajectoire de la tête de lubrification. On obtient ainsi un accrochage satisfaisant des pompes sur les têtes de lubrification.

Dans un mode de réalisation de l'invention, pendant la phase de graissage, lesdites première et deuxième trajectoires sont rectilignes et parallèles.

Dans un mode de réalisation de l'invention, la partie mobile d'une pompe comprend une partie formant cylindre et une partie formant piston, la partie formant piston étant capable d'entrer en contact avec une tête de lubrification. Avantageusement, la partie formant cylindre de la pompe coopère avec une rampe mobile destinée à mettre en contact la partie formant piston de la pompe et la tête de lubrification. La partie formant cylindre de la pompe peut comprendre un galet capable de rouler sur ladite rampe mobile.

Dans un mode de réalisation de l'invention, la rampe est mobile en translation dans la direction de déplacement des parties mobiles de pompe, entre une position avancée provoquant le contact entre la partie formant piston de la pompe et la tête de lubrification, et une position rétractée.

Dans un mode de réalisation de l'invention, la partie formant piston de la pompe comprend une tête pourvue d'un orifice d'amenée du lubrifiant et d'une rainure contiguë audit orifice de façon qu'une tête de lubrification passe dans la rainure et se positionne dans l'orifice en entraînant en déplacement la pompe.

Dans un mode de réalisation de l'invention, le bâti de pompe comprend des surfaces de roulement capables de coopérer avec des galets de guidage pour maintenir la partie formant piston de la pompe coaxiale à la tête de lubrification correspondante.

Avantageusement, le moyen de liaison est une chaîne comprenant des maillons d'adaptation permettant d'ajuster l'écartement entre deux pompes à l'écartement entre deux têtes de lubrification.

Le procédé de lubrification, selon l'invention, est destiné à des organes mobiles suivant une première trajectoire déterminée, disposés à intervalles constants et pourvus de plusieurs têtes de lubrification espacées les unes des autres. On guide le long d'une deuxième trajectoire, une pompe comprenant un bâti supportant une partie formant cylindre et une partie formant piston, mobiles en translation par rapport au bâti. On fait saillir la partie formant cylindre selon un mouvement de translation perpendiculaire à la trajectoire des organes mobiles, de façon qu'une tête de lubrification entre en contact avec la partie formant piston d'une pompe et provoque le déplacement de la pompe le long de la deuxième trajectoire et le déplacement de la partie formant piston relativement à la partie formant cylindre pour injecter le lubrifiant dans la tête de lubrification, la partie formant piston de la pompe étant coaxiale à la tête de lubrification et le bâti de la pompe étant immobile par rapport à ladite tête de lubrification.

De préférence, lors d'une phase de graissage, la partie formant cylindre d'une pompe roule sur une rampe rétractable de façon que ladite partie formant cylindre fasse saillie en direction d'une tête de lubrification.

Grâce à l'invention, on obtient un dispositif de lubrification d'utilisation simple et facile à positionner par rapport aux organes mobiles.

La présente invention sera mieux comprise à l'étude de la description détaillée d'un mode de réalisation pris à titre nullement limitatif et illustré par les dessins annexés, sur lesquels :
la figure 1 est une vue de dessus en élévation d'un dispositif de lubrification selon l'invention;
la figure 2 est une vue en coupe transversale du dispositif de la figure 1; et
la figure 3 est une vue montrant la coopération d'une tête de lubrification avec la partie mobile d'une pompe.

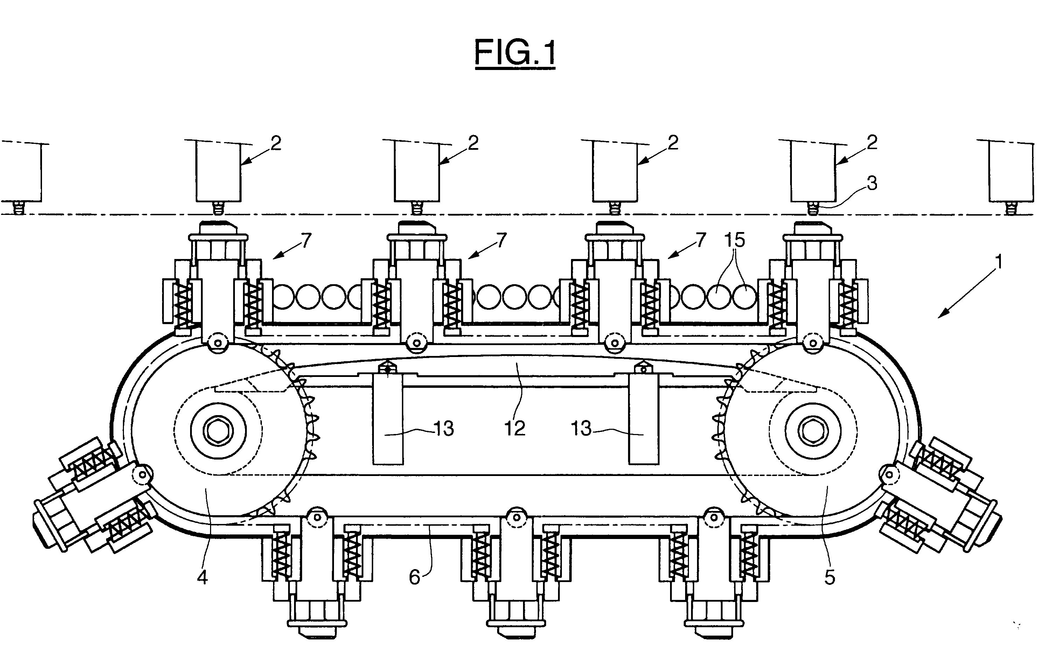

Tel que représenté sur la figure 1, le dispositif de lubrification 1 est destiné à lubrifier les organes mobiles 2, selon au moins une portion de trajectoire rectiligne, et régulièrement espacés. Chaque organe mobile 2 comprend une tête de graissage 3 destinée à l'entrée de la graisse dans l'organe.

Le dispositif de lubrification 1 comprend deux roues de renvoi 4 et 5 entre lesquelles est tendue une chaîne de liaison 6. Les roues de renvoi 4 et 5 sont dentées et coopèrent avec les maillons non représentés de la chaîne 6. La chaîne 6 supporte une pluralité de pompes 7 à intervalles constants. Certains maillons de la chaîne 6 sont de longueur réglable pour ajuster l'écartement entre deux pompes 7 à l'écartement entre deux têtes de lubrification 3. Les pompes 7 peuvent ainsi circuler sans fin entre les roues de renvoi 4 et 5.

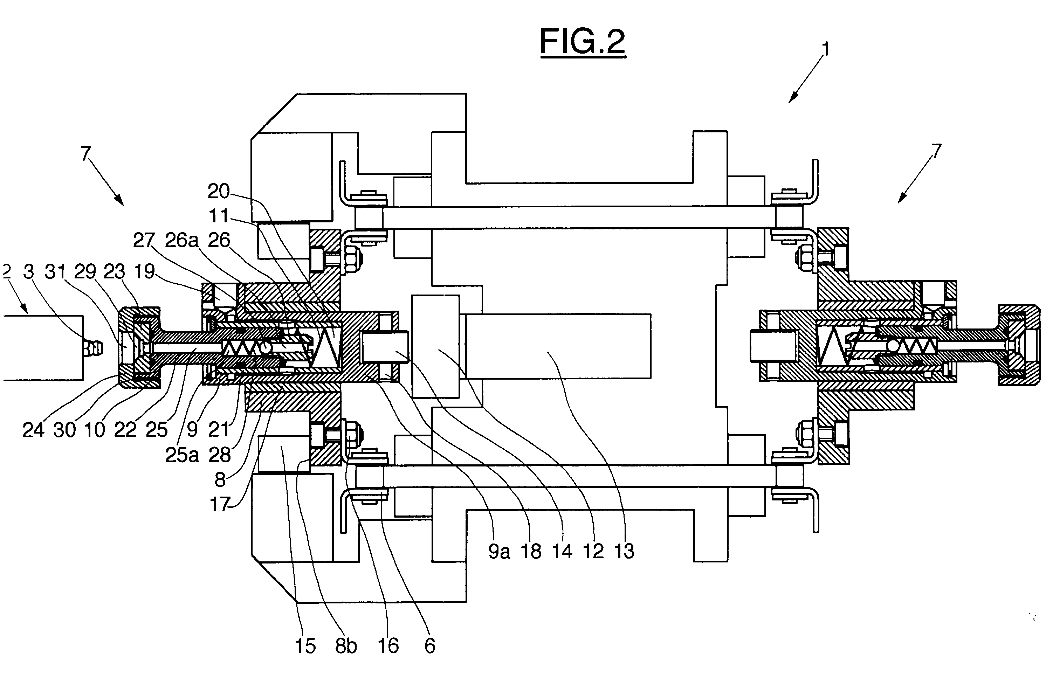

Comme on le voit plus particulièrement sur la figure 2, chaque pompe 7 comprend un bâti 8 fixé à la chaîne 6, une pièce intermédiaire 9 qui forme un cylindre mobile en translation par rapport au bâti 8 dans une direction perpendiculaire au mouvement dudit bâti 8, et un piston 10 mobile en translation par rapport à la pièce intermédiaire 9 et capable de venir en contact avec une tête de lubrification 3. Le piston 10 est, au repos, en position sortie par rapport à la pièce intermédiaire 9 et peut être enfoncé dans la pièce intermédiaire 9 par application d'une force.

Le dispositif de lubrification 1 comprend également une rampe 12 à profil en arc de cercle, mobile en translation en direction des organes 2 sous l'action de vérins 13. Sur la figure 1, la rampe 12 est représentée en position rétractée. L'extrémité 9a de la pièce intermédiaire 9 d'une pompe 7 est équipée, à l'opposé du piston 10, d'un galet de roulement 14 capable de rouler sur la rampe 12 lorsque celle-ci est en position de travail. Le dispositif de lubrification 1 comprend également une pluralité de galets de guidage 15 fixes et capables de maintenir la position du bâti 8 d'une pompe 7 sur la portion de trajectoire faisant face aux organes 2. Les galets de guidage 15 sont disposés de façon rectiligne et entrent en contact avec une surface plane 8b du bâti 8 faisant face aux organes mobiles 2. Une surface 8b est simultanément en contact avec plusieurs galets de guidage 15 de façon que le bâti 8, la pièce intermédiaire 9 et le piston 10 soient maintenus dans l'axe des têtes de lubrification 3.

Le bâti 8 est fixé sur la chaîne 6 au moyen de boulons 16. La pièce intermédiaire 9 peut coulisser par rapport au bâti 8 dans le sens indiqué par la flèche, au moyen d'une bague de coulissement 17. L'extrémité 9a de la pièce intermédiaire 9 supporte l'axe 18 du galet de roulement 14 qui fait face à la rampe 12. La pièce intermédiaire 9 est pourvue d'un orifice 19 destiné à remplir de graisse la chambre 20 définie entre la pièce intermédiaire 9 et le piston 10. L'alésage de la pièce intermédiaire 9 est équipé d'une chemise 21 garantissant l'étanchéité avec le piston 10. Le ressort 11 logé dans la chambre 20 tend à repousser le piston 10 vers l'extérieur.

Le piston 10 comprend un corps 22, un organe de contact 23 et une tête 24, disposés sur l'extrémité libre du corps 22. Le corps 22 est muni d'un trou traversant 25 mettant en communication la chambre 20 et l'organe de contact 23 pour le passage de la graisse. Du côté de la chambre 20, un manchon 26 est fixé dans le trou traversant 25 et sert au guidage du ressort 11 et à bloquer une bille 27 et un ressort 28 disposés dans une portion 25a de grand diamètre du trou traversant 25. En position de repos, le ressort 28 pousse la bille 27 de façon que celle-ci soit en contact avec le manchon 26 et obture le trou traversant 26a prévu dans le manchon 26. En position de repos, la graisse contenue dans la chambre 20 n'est donc pas en contact avec l'atmosphère ambiante, ce qui évite sa dégradation.

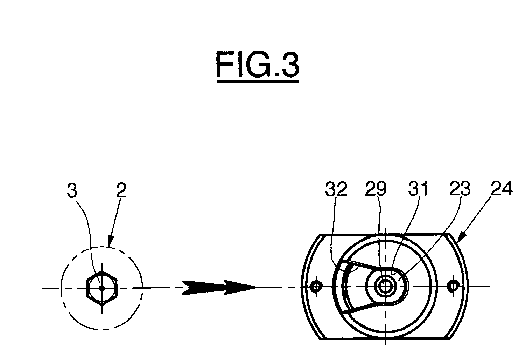

L'organe de contact 23 a la forme d'une plaque percée en son centre d'un orifice 29 capable de recevoir la tête de lubrification 3 de l'organe mobile 2, lors d'une phase de graissage. L'organe de contact 23 est logé dans une cuvette 30 du corps 22 du piston 10. La cuvette 30 est en communication avec le trou traversant 25. L'organe de contact 23 est maintenu dans la cuvette 30 par la tête 24 emmanchée sur le corps 22 du piston 10. La tête 24 est pourvue d'un orifice 31 situé dans le prolongement de l'orifice 29 de l'organe de contact 23 et du trou traversant 25 du corps 22 du piston 10. Sur un côté de la tête 24, l'orifice 31 se prolonge par une rainure 32 ( figure 3), de forme évasée et capable de recevoir la tête de lubrification 3 d'un organe mobile 2.

En fonctionnement, on positionne le dispositif de lubrification 1 en face des organes mobiles 2, de façon que les pompes 7 puissent suivre une trajectoire parallèle à celle des organes mobiles 2. Une telle position est représentée sur la figure 1. Puis on commande l'actionnement des vérins 13, ce qui provoque l'avancée de la rampe 12 en direction des organes mobiles 2. Le galet de roulement 14 d'une pompe 7 vient en contact avec la rampe 12. Comme le bâti 8 reste assujetti à une trajectoire rectiligne grâce au maintien assuré par les galets 15, seuls la pièce intermédiaire 9 et le piston 10 se déplacent en direction de l'organe mobile 2. Lorsque la tête 24 d'un piston 10 est suffisamment avancée, la tête de lubrification 3 d'un organe mobile 2 voit sur sa trajectoire ladite tête 24 (figure 3). La tête de lubrification 3 va alors passer par la rainure 32 et se positionner dans l'orifice 31 de la tête 24. La tête de lubrification 3 entraîne alors dans son mouvement le piston 10, la pompe 7 et par conséquent la chaîne 6 et les autres pompes 7 du dispositif de lubrification 1.

Lorsque la rampe 12 est en position complètement avancée, la tête de lubrification 3 d'un organe mobile 2 après son contact avec la tête 24 du piston 10 rentre dans l'orifice 29 de l'organe de contact 23, puis exerce une poussée sur l'organe de contact 23 et sur le piston 10, ce qui provoque la rentrée du corps 22 du piston 10 dans la chambre 20 et le passage de la graisse contenue dans la chambre 20 par le trou traversant 26a du manchon 26 et dans le trou traversant 25 du corps 22 du piston 10 en forçant la bille 27 et le ressort 28 à libérer le passage. La graisse est ainsi injectée dans l'organe mobile 2. La pompe 7 poursuit sa trajectoire en contact avec la rampe 12 tout en restant coaxiale à la tête de lubrification 3. Le bâti 8 est immobile par rapport à la tête de lubrification 3 pendant toute la phase de graissage. Seuls la pièce intermédiaire 9 et le piston 10 se déplacent en translation par rapport à la tête de lubrification 3 selon une direction perpendiculaire à la trajectoire de la tête de lubrification 3.

Sur la partie descendante de la rampe 12, la pièce intermédiaire 9 tend à s'éloigner de l'organe mobile 2, ce qui permet au piston 10 de faire de nouveau saillie de la chambre 20 et à la chambre 20 de se remplir de nouveau de graisse par un moyen d'alimentation non représenté. Lorsqu'une pompe 7 quitte la rampe 12, la pièce intermédiaire 9 retrouve sa position initiale et la chambre 20 est de nouveau remplie de graisse et prête à une nouvelle phase de graissage. La pompe 7 poursuit son trajet en étant entraînée par la chaîne 6, passe par les roues de renvoi 4 et 5 et se présente de nouveau, à la sortie de la roue de renvoi 5, en face d'un organe mobile 2.

Grâce à l'invention, on obtient un dispositif de lubrification automatique dont l'accrochage sur les organes mobiles à lubrifier est satisfaisant, les pistons des pompes se présentant face aux têtes de lubrification, coaxialement à celles-ci.

Un tel dispositif de lubrification automatique est bien adapté aux escaliers mécaniques, aux trottoirs roulants ou à différents types de convoyeurs utilisés pour la manutention de marchandises.

## Revendications

1. Dispositif de lubrification automatique (1) destiné à approvisionner en lubrifiant des organes mobiles (2) suivant une première trajectoire déterminée, disposés à intervalles constants et pourvus de plusieurs têtes de lubrification (3) espacées les unes des autres, comprenant une pluralité de pompes (7) entraînées suivant une deuxième trajectoire, pourvues d'un bâti (8) supportant une partie mobile en translation par rapport au bâti, la partie mobile étant capable de venir en contact avec une tête de lubrification pour y injecter du lubrifiant pendant une phase de graissage, lesdites pompes étant reliées par un moyen de liaison sans fin, la partie mobile d'une pompe étant, pendant la phase de graissage, coaxiale à la tête de lubrification correspondante dès le contact entre ladite partie mobile et ladite tête de lubrification, le dispositif comprenant un moyen pour maintenir le bâti (7) d'une pompe (8) immobile relativement à la tête de lubrification (3) correspondante et la partie mobile se déplaçant perpendiculairement à la trajectoire de la tête de lubrification, caractérisé par le fait que le dispositif est entraîné par l'action des têtes de lubrification sur les parties mobiles des pompes.

2. Dispositif selon la revendication 1, caractérisé par le fait que, pendant la phase de graissage, lesdites première et deuxième trajectoires sont rectilignes et parallèles.

3. Dispositif selon la revendication 1 ou 2, caractérisé par le fait que la partie mobile d'une pompe comprend une partie formant cylindre (9) et une partie formant piston (10) capable d'entrer en contact avec une tête de lubrification (3).

4. Dispositif selon la revendication 3, caractérisé par le fait que la partie formant cylindre de la pompe coopère avec une rampe mobile (12) destinée à mettre en contact la partie formant piston de la pompe et la tête de lubrification.

5. Dispositif selon la revendication 4, caractérisé par le fait que la partie formant cylindre (9) de la pompe comprend un galet (14) capable de rouler sur ladite rampe mobile.

6. Dispositif selon la revendication 4 ou 5, caractérisé par le fait que la rampe (12) est mobile en translation dans la direction de déplacement des parties mobiles de pompe, entre une position avancée provoquant le contact entre la partie formant piston (10) de la pompe et la tête de lubrification (3) et une position rétractée.

7. Dispositif selon l'une quelconque des revendications précédentes, caractérisé par le fait que la partie formant piston (10) de la pompe comprend une tête (24) pourvue d'un orifice (31) d'amenée du lubrifiant et d'une rainure (32) contiguë audit orifice de façon qu'une tête de lubrification passe dans la rainure et se positionne dans l'orifice en entraînant en déplacement la pompe.

8. Dispositif selon l'une quelconque des revendications précédentes, caractérisé par le fait que le bâti (8) de pompe comprend des surfaces de roulement capables de coopérer avec des galets de guidage (15) pour maintenir la partie formant piston de la pompe coaxiale à la tête de lubrification correspondante.

9. Dispositif selon l'une quelconque des revendications précédentes, caractérisé par le fait que le moyen de liaison est une chaîne (6) comprenant des maillons d'adaptation permettant d'ajuster l'écartement entre deux pompes à l'écartement entre deux têtes de lubrification.

10. Procédé de lubrification d'organes mobiles (2) suivant une première trajectoire déterminée, disposés à intervalles constants et pourvus de plusieurs têtes de lubrification (3) espacées les unes des autres, caractérisé par les étapes suivantes :
- on guide le long d'une deuxième trajectoire une pompe (7) comprenant un bâti (8) supportant une partie formant cylindre (9) et une partie formant piston (10) mobiles en translation par rapport au bâti,
- on fait saillir la partie formant cylindre selon un mouvement de translation perpendiculaire à la trajectoire des organes mobiles, de façon qu'une tête de lubrification (3) entre en contact avec la partie formant piston (10) d'une pompe et provoque le déplacement de la pompe le long de la deuxième trajectoire et le déplacement de la partie formant piston relativement à la partie formant cylindre pour injecter le lubrifiant dans la tête de lubrification, la partie formant piston de la pompe étant coaxiale à la tête de lubrification et le bâti de la pompe étant immobile par rapport à ladite tête de lubrification.

11. Procédé selon la revendication 10, caractérisé par le fait que, lors d'une phase de graissage, la partie formant cylindre (9) d'une pompe roule sur une rampe (12) rétractable de façon que ladite partie formant cylindre fasse saillie en direction d'une tête de lubrification.
